# EUROPEAN PATENT SPECIFICATION

(11) **EP 1 224 117 B1**
(45) Date of publication and mention of the grant of the patent: **21.01.2004**
(21) Application number: 00966376.6
(22) Date of filing: 23.10.2000
(51) Int. Cl.: B64C 29/00, B64D 27/24

(54) **AIRCRAFT AND METHOD FOR OPERATING AN AIRCRAFT**
FLUGGERÄT UND VERFAHREN ZU DESSEN BETRIEB
AERONEF ET PROCEDE DE FONCTIONNEMENT D'UN AERONEF

(30) Priority: 26.10.1999 CH 195999; 30.12.1999 US 475325
(43) Date of publication of application: 24.07.2002
(73) Proprietor: Bucher, Franz, CH-4058 Basel (CH)
(72) Inventor: Bucher, Franz, CH-4058 Basel (CH)
(74) Representative: Blum, Rudolf Emil Ernst
(86) International application number: PCT/IB2000/001513
(87) International publication number: WO 2001/030652

(56) References cited:
- FR-A- 1 550 060
- US-A- 3 284 027
- US-A- 3 335 977
- US-A- 3 614 030
- US-A- 5 242 132
- US-A- 5 895 011

## Description

### Technical Field

The invention relates to an aircraft and a method for its operation, in particular an aircraft with electrically driven motors.

### Background Art

Modern aircraft must combine a high level of safety with economic efficiency. Furthermore, they should be adaptable for various applications.

A very versatile concept is provided by aircraft of the VTOL type, such as it is e.g. disclosed in US 5 419 514. Even though various designs have been proposed in this field, none of them has led to an aircraft that fulfils the requirements of modern commercial flight, in particular in view of safety and efficiency.

### Disclosure of the Invention

Therefore, the problem to be solved is to provide an aircraft and a method for operating an aircraft that provide a high level of safety and economic efficiency.

This problem is solved by the independent claims.

According to the invention, the power for the drives is generated by a combustion engine driving an electric generator. The power from the generator is used by the electrically operated drive units for generating lift and forward thrust of the aircraft. This combines the good ratio between weight and energy storage of a combustion engine with the reliability and fast response of electric motors. Since the engine drives a generator only, its operating parameters are exposed to lesser variations than those of conventional aircraft engines, which reduces the risk of defects and increases efficiency.

Some or preferably all of the drive units can be pivoted individually, such that their thrust can be adjusted according to demand. Since they use electric motors and no combustion engines, their reliable operation is not impaired by the pivotal movements. The drive units can be pivoted from a vertical position up to a horizontal position. In the vertical position, they generate a lift that carries the aircraft in hover flight. In the horizontal position, they generate a forward thrust for a cruise flight of the aircraft.

The drive units are preferably designed to be ducted fans comprising at least one fan or impeller arranged in a tube-like hosing. Such ducted fans reach very high flow velocities and generate a low amount of noise.

By arranging the drive units on a circle, a configuration that is especially stable and easy to control is provided. Preferably, the aircraft comprises a central cabin and a circular wing arranged around the cabin. The drive units are arranged between the cabin and the circular wing. A design of high symmetry is preferred, where a gap for receiving the drive units is provided between the central cabin and the circular wing, because such an aircraft can be assembled from few, simple units.

In their horizontal position, the thrust axes of the drive units should be arranged above the central plane of the circular wing, such that the airflow on its surface is increased and lift is improved.

Preferably, at least five drive units are used, because when using only four drive units, the loss of only one of them leads to a configuration that is impossible to control in most situations.

Also, it is preferred not to arrange the drive units on a line, but e.g. in a circle, because such an arrangement gives a safe control for pitch and roll movements. This is especially important during transition from hover to cruise flight, where substantial pitch moments have to be compensated.

The aircraft can be operated in hover flight and cruise flight. In hover flight, the drive units are pivoted downwards to generate a lift for keeping the craft in the air. In cruise flight, the drive units are pivoted backwards to generate a forwards thrust, wherein the lift is dynamically generated by the profile of the fuselage.

The attitude of the aircraft, i.e. its pitch, roll and yaw can be controlled by pivoting the drive units and adjusting their thrust.

### Brief Description of the Drawings

The invention will be better understood and objects other than those set forth above will become apparent when consideration is given to the following detailed description thereof. Such description makes reference to the annexed drawings, wherein:
Fig. 1 is a front view of an embodiment of the invention in cruise flight,
Fig. 2 is a sectional view of the craft of Fig. 1 in take-off position,
Fig. 3 is a horizontal, sectional view of the craft of Fig. 2 and
Fig. 4 is a partially sectional view of a drive unit with adjustable outlet diameter.

### Modes for Carrying Out the Invention

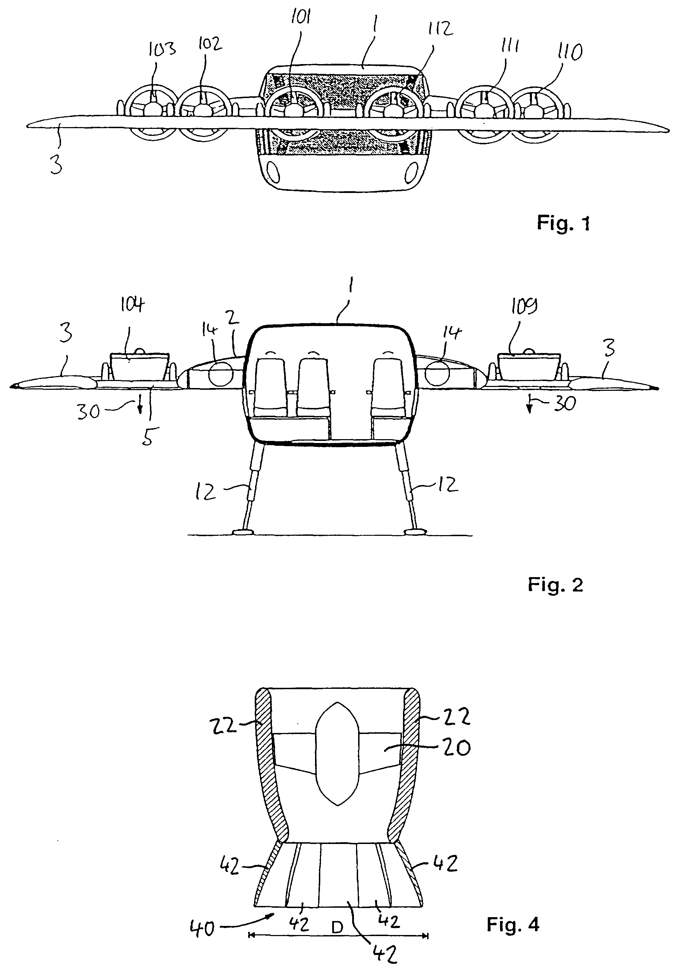

The basic design of a preferred embodiment of the aircraft is shown in Figs. 1 - 3. It comprises an elongate central cabin 1 arranged in the center of a central disc 2. A circular wing 3 is located concentrically around central disc 2. A ring-shaped gap 4 is arranged concentrically to and around central disc 2 and cabin 1. Radial spokes 5 are extending through gap 4. Twelve drive units 101 - 112 are located between the spokes 5 along the inner side of circular wing 3. The design and function of these drive units are explained in detail below.

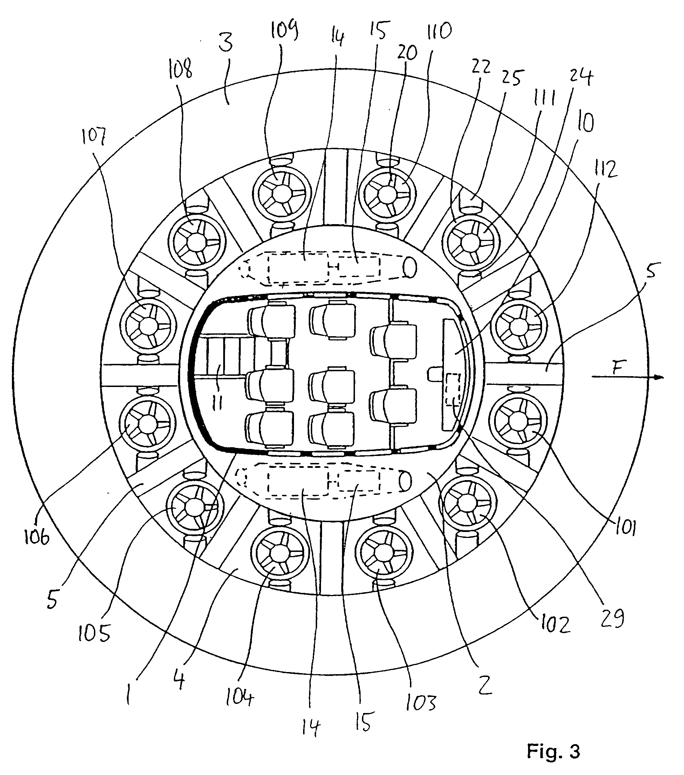

As shown in Figs. 2 and 3, the present embodiment of the aircraft offers space for two pilots and six passengers. Cabin 1 further provides room for a control console 10 and an entrance 11. Four extensible legs 12 mounted on cabin 1 are used for parking and taxiing.

Two combustion engines 14 are arranged in central disc 2 lateral to cabin 1, each driving a generator 15. Generators 15 provide power for feeding the electrically driven drive units 101 - 112. The engines 14 and generators 15 are dimensioned such that there is sufficient power for a safe landing even after failure of one engine or generator.

Each drive unit comprises an electrically driven ducted fan with an impeller or ventilator 20 and an electric motor. The impeller or fan 20 is located coaxially in a tube-shaped duct 22. Duct 22 is pivotally mounted between two arms 24, 25. The pivotal position of the ducted fan is controlled by an electric actuator in a range of more than 90°. In particular, the drive units can be pivoted from the horizontal position shown in Fig. 1, where they generate a forward thrust for the aircraft, into the vertical position of Fig. 2, where they generate a lifting thrust.

As mentioned before, all drive units are fed by the generators 15, wherein the power of each drive unit is individually controlled by a schematically shown control unit 29. Control unit 29 can also control the pivotal position of each drive unit individually. All control signals required for this purpose are computed from the pilot's flight orders. The pilot does not need to worry about the adjustment of the individual components but merely indicates the parameters that he is interested in, such as pitch, yaw, and speed of his aircraft.

The aircraft can be operated in hover and cruise flight, and it can safely handle the transition between these two states.

In hover flight as well as during starting and landing, the drive units 101 - 112 are pivoted such that they generate an airjet 30 directed downwards. This corresponds to the position shown in Fig. 2. The lift generated in this way is sufficient for keeping the fully loaded and tanked aircraft in hover.

Attitude and displacements of the craft in hover flight can be adjusted by the power and pivotal angles of the drive units 101 - 112.

For adjusting lift, the power of all drive units can be increased or decreased simultaneously. A roll of the craft is preferably controlled by reducing or increasing the power of the lateral drive units 103, 104, 109, 110, pitch by reducing or increasing the power of the forward and aft drive units 101, 112, 106, 107 and yaw by opposite pivoting the lateral drive units 103, 104, 109, 110.

Lateral offset of the craft can be achieved by reducing the thrust of the drive units on one side, which generates a slight roll resulting in a slightly lateral thrust.

Forward and backward movements of the craft can e.g. be controlled tilting all drive units.

In cruise flight with high velocity all drive units are preferably arranged parallel to flight direction F, as it is shown in Fig. 1, and they generate an airjet directed backwards and thereby a thrust for forward movement. The lift is generated by the aerodynamic profile of the craft (circular wing and cabin).

For attitude control in cruise flight, the pivotal angle and/or thrust of the drive units are adjusted. No flaps, rudders or ailerons are required.

In transition between hover and cruise flight, the drive units are brought from the vertical position of Fig. 2 and 3 into the horizontal position of Fig. 1. For this purpose, all drive units can e.g. by pivoted simultaneously and slowly about 90°. Alternatively, the transition can be started by pivoting only a part of the drive units while the other drive units remain directed downwards.

The present embodiment of the craft is designed for vertical landing. For emergency landings, a parachute is arranged in the craft, which, together with the large wing area, is sufficient to break the fall sufficiently. In case of an emergency landing, the spring damped legs 12 provide a crumple zone.

In case of a failure of drive power, the drive units can still be pivoted and be used as flaps, such that a gliding flight is possible.

The embodiment of the aircraft shown in Figs. 1 - 3 has an outer diameter of approximately 8 meters and a wing area of approximately 29 m². It can be made of synthetic materials and has an empty weight of approximately 2 tons. The maximum take off weight is 3.6 tons with a redundant engine power of 2 x 1600 horse power and a total drive unit power of 100 kW. The aircraft can easily be scaled to different sizes.

Depending on the size of the craft, the number of drive units can be varied. At least five, preferably at least six drive units are preferred.

Because of the high symmetry of the craft and the application of several, identical drive units, the production as well as spare parts management and maintenance are substantially simplified. At the same time, the aircraft has high stability.

In the present embodiment, circular wing 3 of the craft is completely round. It is, however, possible to build a circular ring from several straight wing sections arranged substantially tangential around cabin 1. Or the wing can have oval shape. The term "circular wing" used in the claims is to comprise all such embodiments.

Other wing shapes, in particular triangular wings, could also be used.

The present craft is suited as passenger or cargo vehicle. Due to its ability to take off vertically, it can also be used in situations where space is limited.

Since several electric motors are used for the drive units, the aircraft can react very quickly when applied forces vary, and it is very mobile. Furthermore, since many drive units are being used, the individual motors are comparatively small such that they can react quickly.

During hover flight, the velocity of the aircraft is fairly small while the thrust to be generated by the drive units 101 - 112 must be fairly high. During cruise flight, the velocity of the aircraft is high while the thrust can be smaller than during hover flight. Hence, it is preferred to design the drive units in such a way that they provide high thrust for hover flight, while they provide a high exit air velocity for cruise flight.

A preferred embodiment of the drive units fulfilling this requirement is shown in Fig. 4. As can be seen, the air outlet 40 of the drive unit is formed by a plurality of guide plates 42 arranged for forming a flared opening. The diameter D of the outlet with the guide plates 42 in the position of Fig. 4 is larger than the outlet diameter without the guide plates 42. Typically, the diameter D can e.g. be 95 cm with the guide plates 42 and 65 cm without them. To decrease the outlet diameter, guide plates 42 can be retracted into duct 22. Hence, the arrangement of Fig. 4 with extended guide plates 42 and large outlet diameter D is used for hover flight, while the guide plates 42 are retracted for cruise flight.

Alternatively to retracting the guide plates 42 into duct 22, the guide plates 42 can be constructed to be pivoted towards the axis of the drive unit, thereby decreasing diameter D without being retracted.

Other arrangements for decreasing the outlet diameter of the drive units, such as iris arrangements or stopper plates closing part of the output opening are known to a person skilled in the art.

Guide plates 42 can be actuated by dedicated servo motors. However, preferably, their movement is coupled to the pivot movement of the drive units such that the diameter D is decreased automatically when the drive units are pivoted from their vertical position into their horizontal position.

Alternatively or in addition to using an adjustable outlet diameter D, the blade angle of impeller or ventilator 20 can be adjustable. It is increased in cruise flight and decreased in hover flight.

While there are shown and described presently preferred embodiments of the invention, it is to be distinctly understood that the invention is not limited thereto but may be otherwise variously embodied and practiced within the scope of the following claims.

## Claims

1. An aircraft comprising
a central cabin (1),
a wing (3) extending at least partially around the cabin,
at least one generator (15) for generating electrical power,
at least one engine (14) for driving said generator (15), and
electrically driven drive units (101 - 112) for generating lift and forward thrust, wherein at least part of the drive units are pivotal from a vertical position to a horizontal position, and
means for adjusting the power of at least part of the drive units (101 - 112) individually,
wherein in said vertical position the drive units (101 - 112) are adapted to generate a lift sufficient for lifting the weight of the aircraft, and wherein in said horizontal position said drive units are adapted to generate a forward thrust while said lift is generated aerodynamically by said cabin (1) and said wing (3).

2. The aircraft of claim 1 wherein at least some of said drive units are pivotal individually.

3. The aircraft of claim 2 wherein each of the pivotal drive units is pivotal about a pivoting axis, wherein said pivoting axes are parallel to each other and perpendicular to a forward direction of said aircraft.

4. The aircraft of one of the preceding claims wherein said drive units (101 - 112) comprise ducted fans.

5. The aircraft of claim 4 wherein the ducted fans have a variable outlet diameter.

6. The aircraft of claim 5 wherein the ducted fans have a retractable, flared outlet (40).

7. The aircraft of one of the claims 5 or 6 wherein the outlet diameter is decreased by pivoting the drive units from the vertical position into the horizontal position.

8. The aircraft of one of the preceding claims wherein the drive units (101 - 112) are arranged on a circle.

9. The aircraft of one of the preceding claims wherein said drive units (101 - 112) are arranged between the cabin (1) and said wing (3).

10. The aircraft of one of the preceding claims wherein the wing (3) is a circular wing.

11. The aircraft of one of the preceding claims comprising a substantially circular gap (4) between the cabin (1) and the wing (3), wherein the drive units (101 - 112) are arranged in the gap.

12. The aircraft of one of the preceding claims wherein a thrust axis of the pivotal drive units (101 - 112) can be pivoted to a horizontal position where the drive units generate the forward thrust, wherein in the horizontal position the thrust axes are located above a central plane of the wing (3).

13. The aircraft of one of the preceding claims comprising at least five drive units (101 - 112).

14. The aircraft of one of the preceding claims comprising at least six drive units (101 - 112).

15. The aircraft of one of the preceding claims wherein each drive unit (101 - 112) comprises a fan with adjustable blade angle.

16. The aircraft of one of the preceding claims wherein all said drive units (101 - 112) are substantially identical.

17. The aircraft of one of the preceding claims wherein each of said drive units comprises an electric motor.

18. The aircraft of one of the preceding claims wherein said drive units are not arranged on a line for controlling pitch and roll of the aircraft.

19. Aircraft, in particular according to one of the preceding claims, comprising
a central cabin (1),
a wing (3) extending at least partially around the cabin,
at least one generator (15) for generating electrical power,
at least one engine (14) for driving said generator (15), and
electrically driven drive units (101 - 112) arranged between the cabin (1) and the wing (3) for generating lift and forward thrust, wherein at least part of the drive units are pivotal from a vertical position to a horizontal position.

20. A method for operating an aircraft, said aircraft comprising at least one generator (15) for generating electrical power, at least one engine (14) for driving the generator, and electrically driven, pivotal drive units (101 - 112) for generating lift and forward thrust, wherein each drive unit has a thrust axis, said method comprising the steps of
adjusting said thrust axes of said drive units (101 - 112) downwards for generating a lift for lifting the weight of the aircraft for hover flight and
adjusting said thrust axes of said drive units (101 - 112) horizontally for generating a forward thrust for cruise flight, wherein in said cruise flight a lift is generated by an aerodynamic profile of said aircraft,
wherein in hover flight an attitude of the aircraft is controlled exclusively by tilting the drive units and adjusting a thrust of the drive units.

21. Method for operating an aircraft, in particular of claim 20, said aircraft comprising at least one generator (15) for generating electrical power, at least one engine (14) for driving the generator, and electrically driven, pivotal drive units (101 - 112) generating air jets for generating lift and forward thrust, wherein each drive unit has a thrust axis, said method comprising the steps of
adjusting said thrust axes of said drive units (101 - 112) downwards for generating a lift for lifting the weight of the aircraft for hover flight and
adjusting said thrust axes of said drive units (101 - 112) horizontally for generating a forward thrust for cruise flight, wherein in said cruise flight a lift is generated by an aerodynamic profile of said aircraft,
wherein an exit air velocity of the drive units is adjusted to a higher value during cruise flight than during hover flight by decreasing an outlet diameter of at least some of the drive units or by increasing a fan blade angle of a fan of at least some of the drive units.

22. The method of one of the claims 19 or 20 wherein an attitude of the aircraft is controlled exclusively by tilting the drive units and adjusting a thrust of the drive units.

## Patentansprüche

1. Fluggerät umfassend
eine zentrale Kabine (1),
einen Flügel (3), der sich mindestens teilweise um die Kabine erstreckt,
mindestens einen Generator (15) zur Erzeugung elektrischer Leistung,
mindestens einen Motor (14) zum Antrieb des Generators (15) und
elektrisch angetriebene Triebwerke (101 - 112) zur Erzeugung von Auftrieb und Vortrieb, wobei mindestens ein Teil der Triebwerke von einer vertikalen Position in eine horizontale Position schwenkbar sind, und
Mittel zum individuellen Justieren der Leistung mindestens eines Teils der Triebwerke (101 - 112),
wobei in der vertikalen Position die Triebwerke ausgestaltet sind zum Erzeugen eines Auftriebs, der ausreicht um das Gewicht des Fluggeräts zu heben, und wobei die Triebwerke in der horizontalen Position ausgestaltet sind um einen Vortrieb zu erzeugen, während der Auftrieb aerodynamisch von der Kabine (1) und vom Flügel (3) erzeugt wird.

2. Fluggerät nach Anspruch 1, wobei mindestens einige der Triebwerke individuell schwenkbar sind.

3. Fluggerät nach Anspruch 2, dadurch jedes der schwenkbaren Triebwerke um eine Schwenkachse schwenkbar ist, wobei die Schwenkachsen zueinander parallel sind und senkrecht zu einer Vorwärtsflugrichtung des Fluggeräts.

4. Fluggerät nach einem der vorangehenden Ansprüche, wobei die Triebwerke Impeller aufweisen.

5. Fluggerät nach Anspruch 4, wobei die Impeller einen variablen Austrittsdurchmesser aufweisen.

6. Fluggerät nach Anspruch 5, wobei die Impeller eine einziehbare, sich erweiternde Austrittsöffnung (40) aufweisen.

7. Fluggerät nach einem der Ansprüche 5 oder 6, wobei der Austrittsdurchmesser durch Schwenken der Triebwerke aus der vertikalen Position in die horizontale Position reduziert wird.

8. Fluggerät nach einem der vorangehenden Ansprüche, wobei die Triebwerke (101 - 112) auf einem Kreis angeordnet sind.

9. Fluggerät nach einem der vorangehenden Ansprüche, wobei die Triebwerke (101 - 112) zwischen der Kabine (1) und dem Flügel (3) angeordnet sind.

10. Fluggerät nach einem der vorangehenden Ansprüche, wobei der Flügel (3) ein Rundflügel ist.

11. Fluggerät nach einem der vorangehenden Ansprüche, mit einem im wesentlichen ringförmigen Spalt (4) zwischen der Kabine (1) und dem Flügel (3), wobei die Triebwerke (101 - 112) im Spalt angeordnet sind.

12. Fluggerät nach einem der vorangehenden Ansprüche, wobei eine Schubachse der schwenkbaren Triebwerke (101 - 112) in eine Horizontalposition schwenkbar ist, in welcher die Triebwerke einen Vortrieb erzeugen, wobei die Schubachsen in der Horizontalposition über einer Mittelebene des Flügels (3) liegen.

13. Fluggerät nach einem der vorangehenden Ansprüche mit mindestens fünf Triebwerken (101 - 112).

14. Fluggerät nach einem der vorangehenden Ansprüche mit mindestens sechs Triebwerken (101 - 112).

15. Fluggerät nach einem der vorangehenden Ansprüche, **dadurch gekennzeichnet, dass** jedes Triebwerk (101 - 112) ein Flügelrad (20) mit justierbarem Anstellwinkel aufweist.

16. Fluggerät nach einem der vorangehenden Ansprüche, wobei alle Triebwerke (101 - 112) im wesentlichen gleich sind.

17. Fluggerät nach einem der vorangehenden Ansprüche, wobei jedes der Triebwerke einen Elektromotor aufweist.

18. Fluggerät nach einem der vorangehenden Ansprüche, wobei die Triebwerke zur Kontrolle von Neigung und Kippen des Fluggeräts nicht auf einer Linie angeordnet sind.

19. Fluggerät, insbesondere nach einem der vorangehenden Ansprüche, umfassend
eine zentrale Kabine (1),
einen Flügel (3), der sich mindestens teilweise um die Kabine herum erstreckt,
mindestens ein Generator (15) zur Erzeugung elektrischer Leistung,
mindestens einen Motor (14) zum Antreiben des Generators (15) und
elektrisch angetriebene Triebwerke (101 - 112), die zwischen der Kabine (1) und dem Flügel (3) angeordnet sind zur Erzeugung von Auftrieb und Vortrieb, wobei mindestens ein Teil der Triebwerke von einer vertikalen Position in eine horizontale Position schwenkbar ist.

20. Verfahren zum Betrieb eines Fluggeräts wobei das Fluggerät mindestens einen Generator (15) zum Erzeugen elektrischer Leistung aufweist; mindestens einen Motor (14) zum Antreiben des Generators, und elektrisch angetriebene, schwenkbare Triebwerke (101 - 112) zum Erzeugen von Auftrieb und Vortrieb, wobei jedes Triebwerk eine Schubachse besitzt, wobei das Verfahren die Schritte aufweist:
Justieren der Schubachsen der Treibwerke (101 - 112) nach unten zum Erzeugen eines Vorschubs zum Anheben des Gewichts des Fluggeräts zum Schwebeflug und
horizontales Justieren der Schubachsen der Triebwerke (101 - 112) zum Erzeugen eines Vortriebs zum Gleitflug, wobei im Gleitflug ein Auftrieb von einem aerodynamischen Profil des Fluggeräts erzeugt wird,
wobei im Schwebeflug eine Lage des Fluggeräts exklusiv durch ein Schwenken der Triebwerke und ein Justieren des Schubs der Triebwerke kontrolliert wird.

21. Verfahren zum Betrieb eines Fluggeräts, insbesondere nach Anspruch 20, wobei das Fluggerät mindestens einen Generator (15) zum Erzeugen elektrischer Leistung aufweist, mindestens einen Motor (14) zum Antreiben des Generators, und elektrisch angetriebene, schwenkbare Triebwerke (101 - 112) die Luftstrahlen erzeugen zum Erzeugen von Auftrieb und Vortrieb, wobei jedes Triebwerk eine Schubachse aufweist, wobei das Verfahren die Schritte aufweist
Justieren der Schubachsen der Triebwerke (101 - 112) nach unten zum Erzeugen eines Auftriebs um das Gesicht des Fluggeräts im Schwebeflug anzuheben,
horizontales Justieren der Schubachsen der Triebwerke (101 - 112) zum Erzeugen eines Vortriebs zum Gleitflug, wobei im Gleitflug ein Auftrieb von einem aerodynamischen Profil des Fluggeräts erzeugt wird,
wobei eine Austrittsluftgeschwindigkeit der Triebwerke während dem Gleitflug auf einen höheren Wert justiert wird als während dem Schwebeflug indem ein Austrittsdurchmesser mindestens einiger der Triebwerke reduziert wird oder indem ein Anstellwinkel eines Flügelrads mindestens einiger der Triebwerke erhöht wird.

22. Verfahren nach einem der Ansprüche 19 oder 20, wobei eine Lage des Fluggeräts ausschliesslich durch Kippen der Triebwerke und Justieren des Schubs der Triebwerke kontrolliert wird.

## Revendications

1. Aéronef comportant une cabine centrale (1), une aile (3) s'étendant au moins partiellement autour de la cabine, au moins un générateur (15) pour produire un courant électrique, au moins un moteur (14) pour entraîner le générateur (15), et des unités de propulsion entraînées électriquement (101-112) pour produire une poussée de sustentation, au moins certaines unités de propulsion pouvant pivoter d'une position verticale en une position horizontale, et des moyens pour ajuster individuellement la puissance d'au moins une partie des unités de propulsion (101-112) ces unités étant capables de produire une poussée aérostatique suffisante pour soulever le poids de l'avion lorsqu'elles sont en ladite position verticale, et capables de produire une poussée vers l'avant lorsqu'elles sont en ladite position horizontale et que la sustentation est assurée aérodynamiquement par la cabine (1) et l'aile (3) .

2. Aéronef selon la revendication 1, **caractérisé en ce qu'**au moins certaines unités peuvent pivoter individuellement.

3. Aéronef selon la revendication 2, **caractérisé en ce que** chaque unité pouvant pivoter pivote autour d'un axe de pivotement, les axes de pivotement étant parallèles les uns aux autres, et perpendiculaires à une direction d'avance de l'aéronef.

4. Aéronef selon une des revendications précédentes, **caractérisé en ce que** les unités de propulsion (101-112) comportent des motopropulseurs à soufflantes carénées.

5. Aéronef selon la revendication 4, **caractérisé en ce que** les soufflantes carénées ont un diamètre de sortie variable.

6. Aéronef selon la revendication 5, **caractérisé en ce que** les soufflantes carénées ont une sortie évasée rétractable (40).

7. Aéronef selon une des revendications 5 ou 6, **caractérisé en ce que** le diamètre de la sortie est réduit par pivotement des unités de propulsion de la position verticale à la position horizontale.

8. Aéronef selon une des revendications précédentes, **caractérisé en ce que** les unités de propulsion (101-112) sont disposées en cercle.

9. Aéronef selon une des revendications précédentes, **caractérisé en ce que** les unités de propulsion (101-112) sont disposées entre la cabine (1) et l'aile (3).

10. Aéronef selon une des revendications précédentes, **caractérisé en ce que** son aile est circulaire.

11. Aéronef selon une des revendications précédentes, **caractérisé en ce qu'**il comporte un espace essentiellement circulaire (4) entre la cabine (1) et l'aile (3), et que les unités de propulsion (101-112) sont disposées dan cet espace.

12. Aéronef selon une des revendications précédentes, **caractérisé en ce qu'**un axe de poussée des unités de propulsion pivotables (101-112) peut pivoter en une position horizontale en laquelle lesdites unités produisent la poussée dirigée vers l'avant, les axes de poussée étant situés au-dessus d'un plan central de l'aile (3) lorsqu'ils sont en position horizontale.

13. Aéronef selon une des revendications précédentes comportant au moins cinq unités de propulsion (101-112).

14. Aéronef selon une des revendications précédentes comportant au moins six unités de propulsion (101-112) .

15. Aéronef selon une des revendications précédentes, **caractérisé en ce que** chaque unité de propulsion (101-112) comporte une soufflante avec des pales à pas variable.

16. Aéronef selon une des revendications précédentes, **caractérisé en ce que** toutes les unités de propulsion (101-112) sont essentiellement identiques.

17. Aéronef selon une des revendications précédentes, **caractérisé en ce que** chaque unité de propulsion comporte un moteur électrique.

18. Aéronef selon une des revendications précédentes, **caractérisé en ce que** les unités de propulsion ne sont pas disposés en ligne droite afin de contrôler l'assiette de tangage et de roulis de l'aéronef.

19. Aéronef, en particulier selon une des revendications précédentes, comportant une cabine centrale (1), une aile (3) s'étendant au moins partiellement autour de la cabine au moins un générateur (15) pour produire un courant électrique, au moins un moteur (14) pour entraîner le générateur (15), et des unités de propulsions (101-112) entraînées électriquement disposées entre la cabine (1) et l'aile (3) pour produire la poussée de sustentation et celle nécessaire à l'avance, au moins une partie des unités de propulsion pouvant pivoter d'une position verticale en une position horizontale.

20. Procédé pour piloter un aéronef comportant au moins un générateur de courant électrique (15), au moins un moteur (14) pour entraîner le générateur, et des unités pivotantes (101-112) entraînées électriquement pour créer une poussée de sustentation et d'avance, chaque unité possédant un axe de poussée, ce procédé comportant les étapes suivantes.
orienter les axes de poussée des unités (101-112) vers le bas pour produire une poussée de sustentation servant à soulever l'aéronef un vol stationnaire, et orienter les axes de poussée des unités (101-112) à l'horizontale pour produire une poussée d'avance servant à induire un vol de croisière pendant lequel la sustentation est assurée par le profil aérodynamique de l'aéronef,
l'assiette de l'aéronef en vol stationnaire étant contrôlée exclusivement par pivotement des unités de propulsion et par réglage de leur poussée.

21. Procédé pour piloter un aéronef, en particulier selon la revendication 20, comportant au moins un générateur (15) pour produire un courant électrique, au moins un moteur (14) pour faire marcher le générateur, des unités de propulsion pivotantes (101-112) entraînées électriquement et destinés à produire une poussée de sustentation et une poussée d'avance, chaque unité possédant un axe de poussée, ce procédé comportant les étapes suivantes:
orienter les axes de poussée des unités (101-112) vers le bas pour produire une poussée de sustentation servant à soulever l'aéronef un vol stationnaire, et orienter les axes de poussée des unités (101-112) à l'horizontale pour produire une poussée d'avance servant à induire un vol de croisière pendant lequel la sustentation est assurée par le profil aérodynamique de l'aéronef,
la vitesse de sortie de l'air des unités de propulsion pour le vol en régime de croisière étant réglée à une valeur, supérieure à celle utilisée pour la sustentation stationnaire, soit par rétrécissement du diamètre de sortie d'au moins certaines unités de propulsion, soit en augmentant l'angle d'attaque des pales des soufflantes d'au moins certaines unités de propulsion.

22. Procédé selon une des revendications 19 ou 20, **caractérisée en ce que** l'assiette de l'aéronef est contrôlée exclusivement par pivotement des unités de propulsion et par réglage de leur poussée.
